# EUROPEAN PATENT APPLICATION

(11) **EP 1 517 390 A2**
(43) Date of publication of application: **23.03.2005**
(21) Application number: 04022083.2
(22) Date of filing: 16.09.2004
(51) Int. Cl.: H01M 8/10

(54) **Membrane-electrode structure for solid polymer fuel cell**

(30) Priority: 19.09.2003 JP 2003328310
(71) Applicant: HONDA MOTOR CO., Ltd., Tokyo (JP); JSR Corporation, Tokyo (JP)
(72) Inventor: Otsuki, Toshihiro, Chuo-ku Tokyo (JP); Goto, Kohei, Chuo-ku Tokyo (JP); Takahashi, Ryoichiro, Wako-shi Saitama (JP); Asano, Yoichi, Wako-shi Saitama (JP)
(74) Representative: Böhm, Brigitte, Dipl.-Chem. Dr.

(57) **Abstract**

Disclosed is a membrane-electrode structure for a solid polymer fuel cell comprising a pair of electrode catalyst layers and a polyeletrolyte membrane sandwiched between the electrode catalyst layers, wherein the electrode catalyst layers contain polyarylene having a sulfonic acid group, said polyarylene comprising a recurring unit represented by the following formula (A) and a recurring unit represented by the following formula (B);

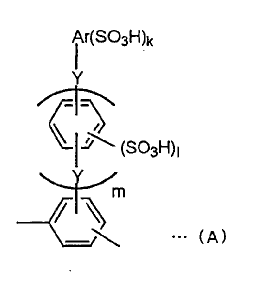

## Description

### FIELD OF THE INVENTION

The present invention relates to a membrane-electrode structure for a solid polymer fuel cell comprising a pair of electrode catalyst layers and a polyelectrolyte membrane sandwiched between the electrode catalyst layers. More particularly, the present invention relates to a membrane-electrode structure for a solid polymer fuel cell comprising electrode catalyst layers, each of which contains polyarylene having a sulfonic acid group and comprising specific recurring units, and a polyelectrolyte membrane sandwiched between the electrode catalyst layers.

### BACKGROUND OF THE INVENTION

Because solid polymer fuel cells have high power density and are capable of working at low temperatures, miniaturization and lightening are feasible, so that these fuel cells are paid attention as automobile power source, fixation cell generator, electric power supply for carrying equipments, etc., and development thereof has been energetically promoted.

The polyelectrolyte type fuel cell comprises a proton-conductive solid polyelectrolyte membrane and a pair of electrodes provided on both sides of the membrane, and by supplying pure hydrogen or a refined hydrogen gas as a fuel gas to one electrode (fuel electrode) and supplying an oxygen gas or air as an oxidizing agent to the other electrode (air electrode), thus electromotive force is obtained.

In the solid polymer fuel cells, perfluoroalkylenesulfonic acid polymer compounds, such as Nafion (trademark) available from DuPont Kabushiki Kaisha, have been heretofore widely used as ion-conductive polymer binders of the electrode catalyst layers. The perfluoroalkylenesulfonic acid polymer compounds have excellent proton conductivity, but they are very expensive, and besides, they have a problem that recovery of expensive noble metals in the electrode catalyst layers, such as platinum, becomes difficult because they contain large amounts of fluorine atoms in their molecules.

In order to solve the above problem, the present inventors have earnestly studied inexpensive ion-conductive materials as substitutes for the perfluoroalkylenesulfonic acid polymer compounds, and as a result, they have found that specific sulfonic acid group-containing polyarylene has excellent covering properties for catalyst particles and exhibits excellent electricity generation performance. Further, the sulfonic acid group-containing polyarylene does not contain halogen atoms such as a fluorine atom in its molecular structure or contains them in extremely decreased amounts, and hence, it is possible to solve the aforesaid problem concerning the recovery of a catalyst metal.

### OBJECT OF THE INVENTION

It is an object of the present invention to solve the problem concerning the recovery of a catalyst metal and to provide a membrane-electrode structure for a solid polymer fuel cell exhibiting excellent electricity generation performance.

### SUMMARY OF THE INVENTION

According to the present invention, the following polyarylene having a sulfonic acid group is used for a binder of the electrode catalyst layer, whereby the above object of the present invention has been attained.
(1) A membrane-electrode structure for a solid polymer fuel cell comprising a pair of electrode catalyst layers and a polyeletrolyte membrane sandwiched between the electrode catalyst layers, wherein:
   the electrode catalyst layers contain polyarylene having a sulfonic acid group, said polyarylene comprising a recurring unit represented by the following formula (A) and a recurring unit represented by the following formula (B); 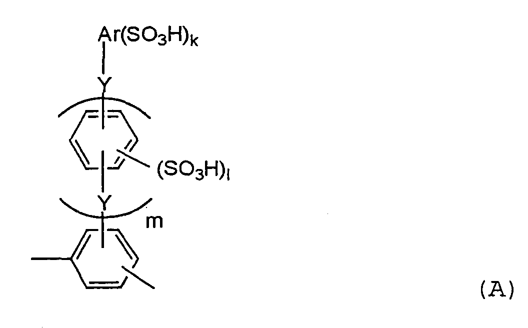
   wherein Y is a direct bonding or a group selected from a divalent electron withdrawing group and a divalent electron donating group, Ar is a mononuclear or polynuclear aromatic group, m is an integer of 0 to 10, when m is an integer of 1 to 10, each Y may be the same or different, k is an integer of 0 to 5, 1 is an integer of 0 to 4, and k+1≥1; 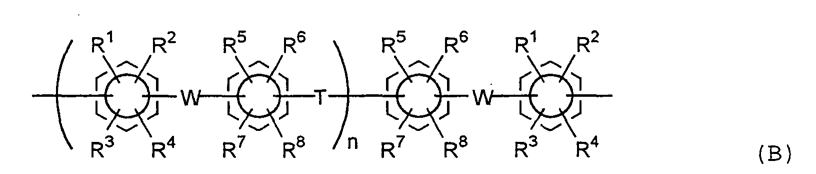 wherein R¹ to R⁸ may be the same or different and are each at least one atom or group selected from the group consisting of a hydrogen atom, a fluorine atom, an alkyl group, a fluorine-substituted alkyl group, an allyl group and an aryl group, W is a divalent electron withdrawing group or a direct bonding, T is at least one bond or group selected from the group consisting of a direct bonding, a divalent electron withdrawing group, a divalent electron donating group and a divalent group represented by the following formula (C-1) or (C-2), and n is an integer of 2 or more; 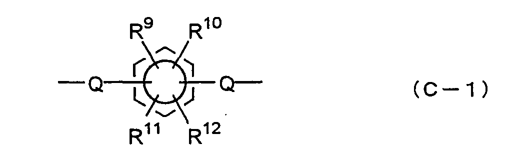 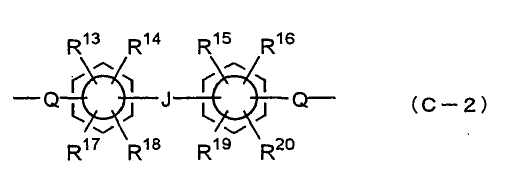 wherein R⁹ to R²⁰ may be the same or different and are each at least one atom or group selected from the group consisting of a hydrogen atom, a fluorine atom, an alkyl group, a fluorine-substituted alkyl group, an allyl group and an aryl group, Q is a direct bonding or a divalent electron donating group, and J is at least one bond, atom or group selected from the group consisting of a direct bonding, an alkylene group, a fluorine-substituted alkylene group, an aryl-substituted alkylene group, an alkenylene group, an alkynylene group, an arylene group, a fluorenylidene group, -O-, -S-, -CO-, -CONH-, -COO-, - SO- and -SO₂-.
(2) The membrane-electrode structure for a solid polymer fuel cell as stated in (1), wherein the polyarylene having a sulfonic acid group is polyarylene containing a sulfonic acid group in an amount of 0.3 to 5.0 meq/g.

### BRIEF DESCRIPTION OF THE DRAWINGS

Fig. 1 is an explanatory sectional view showing an example of constitution of an electrode structure used in the solid polymer fuel cell of the present invention.
Fig. 2 is a graph showing measurement results of variation of voltage (V) of the membrane-electrode structure for solid polymer fuel cells prepared in the examples and the comparative example with current density (A/cm²) in the environment of a temperature of 80°C and a relative humidity of 90%.

1: oxygen electrode
2: fuel electrode
3: polyelectrolyte membrane
4: diffusion layer
5: electrode catalyst layer
6: carbon paper
7: substrate layer

### DETAILED DESCRIPTION OF THE INVENTION

The membrane-electrode structure for a solid polymer fuel cell of the present invention is described in detail hereinafter.

First, polyarylene having a sulfonic acid group, which is used in the membrane-electrode structure of the solid polymer fuel cell according to the present invention, is described.

### Polyarylene having sulfonic acid group

The polyarylene having a sulfonic acid group, which is used in the membrane-electrode structure, contains a recurring unit represented by the following formula (A) and a recurring unit represented by the following formula (B).

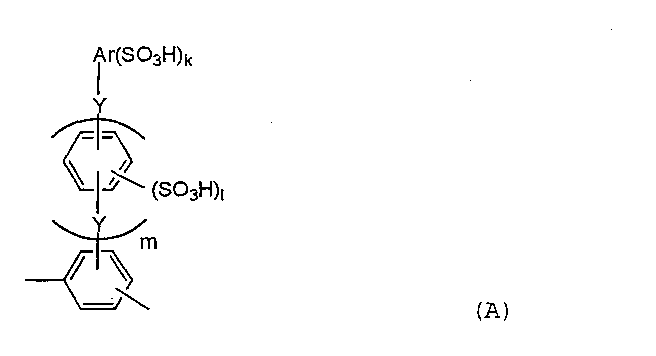

In the formula (A), Y is a direct bonding or a group selected from a divalent electron withdrawing group and a divalent electron donating group. More specifically, there can be mentioned, for example, electron withdrawing groups, such as -CO-, -SO₂-, -SO-, -CONH-, -COO-, -(CF₂)ₚ-(p is an integer of 1 to 10) and -C(CF₃)₂-, and electron donating groups, such as -(CH₂)-, -C(CH₃)₂-, -O- and -S-.

The electron withdrawing group is a group having a Hammett substituent constant of not less than 0.06 in case of the meta position of a phenyl group and that of not less than 0.01 in case of the para position of a phenyl group.

In the formula (A), Ar is a mononuclear or polynuclear aromatic group. Examples of such groups include phenyl, naphthyl, anthracenyl and phenanthryl.

m is an integer of 0 to 10, preferably 0 to 8, more preferably 0 to 5. When m is an integer of 1 to 10, each Y may be the same or different.

In the formula (A), k is an integer of 0 to 5, 1 is an integer of 0 to 4, and k+1≥1.

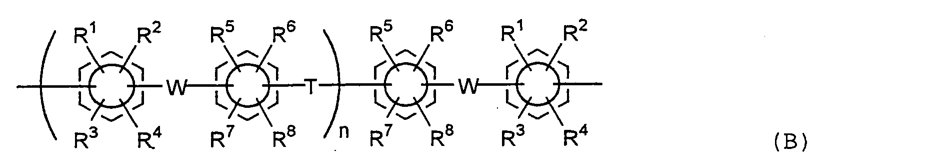

In the formula (B), R¹ to R⁸ may be the same or different and are each at least one atom or group selected from the group consisting of a hydrogen atom, a fluorine atom, an alkyl group, a fluorine-substituted alkyl group, an allyl group and an aryl group.

Examples of the alkyl groups include methyl, ethyl, propyl, butyl, amyl and hexyl. Of these, methyl, ethyl and the like are preferable.

Examples of the fluorine-substituted alkyl groups include trifluoromethyl, perfluoroethyl, perfluoropropyl, perfluorobutyl, perfluoropentyl and perfluorohexyl. Of these, trifluoromethyl, pentafluoroethyl and the like are preferable.

Examples of the allyl groups include propenyl.

Examples of the aryl groups include phenyl and pentafluorophenyl.

W is a direct bonding or a divalent electron withdrawing group, and T is at least one bond or group selected from the group consisting of a direct bonding, a divalent electron withdrawing group, a divalent electron donating group and a divalent group represented by the following formula (C-1) or (C-2).

Examples of the divalent electron withdrawing groups and the divalent electron donating groups include the same groups as described for the electron withdrawing groups and the electron donating groups indicated by Y.

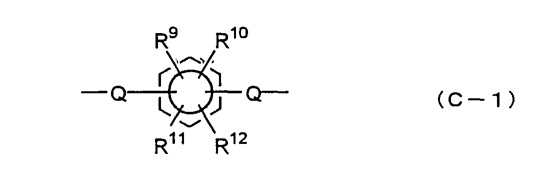

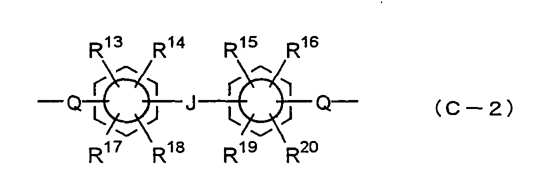

In the formulas (C-1) and (C-2), R⁹ to R²⁰ may be the same or different and are each an atom or a group selected from the group consisting of a hydrogen atom, a fluorine atom, an alkyl group, a fluorine-substituted alkyl group, an allyl group and an aryl group. Examples of such atoms and groups include the same atoms and groups as described for R¹ to R⁸ in the formula (B).

In the formulas (C-1) and (C-2), Q is a direct bonding or a divalent electron donating group. Examples of the divalent electron donating groups include -O-, -S-, -CH=CH- and -C≡C-.

In the formula (C-2), J is at least one bond, atom or group selected from the group consisting of a direct bonding, an alkylene group, a fluorine-substituted alkylene group, an aryl-substituted alkylene group, an alkenylene group, an alkynylene group, an arylene group, a fluorenylidene group, -O-, -S-, -CO-, -CONH-, -COO-, - SO- and -SO₂-.

Examples of the alkylene groups, the fluorine-substituted alkylene groups, the aryl-substituted alkylene groups, the alkenylene groups, the alkynylene groups, the arylene groups and the fluorenylidene groups include -C(CH₃)₂-, -CH=CH-, -CH=CH-CH₂-, -C≡C-, -(CF₂)ₚ- (p is an integer of 1 to 10), -C(CF₃)₂- and groups represented by the following formulas:

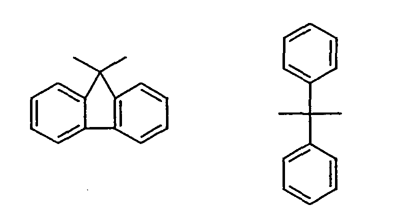

In the formula (B), n is an integer of 2 or more, and the upper limit is usually 100, preferably 10 to 80. If n is less than 2, durability of an electrolyte in the electrode during the electricity generation is not sufficient in some cases, and in order to retain durability having no problem in the practical use, n is preferably 10 or more. However, if n exceeds 100, viscosity of the resulting sulfonated polyarylene copolymer is too high, and the copolymer cannot sufficiently exert a function of a binder for electrode in some cases.

In the polyarylene having a sulfonic acid group used in the present invention, the recurring structural unit represented by the formula (A) is contained in an amount of 0.05 to 99.95% by mol, preferably 10 to 99.5% by mol, and the recurring structural unit represented by the formula (B) is contained in an amount of 99.95 to 0.05% by mol, preferably 90 to 0.5% by mol.

### Process for preparing polyarylene having sulfonic acid group

The polyarylene having a sulfonic acid group can be synthesized in the following manner. A monomer having a sulfonic ester group capable of becoming a structural unit represented by the formula (A) and an oligomer capable of becoming a structural unit represented by the formula (B) are copolymerized to prepare polyarylene having a sulfonic ester group, and the polyarylene having a sulfonic ester group is hydrolyzed to polyarylene having a sulfonic acid group.

The polymer having a sulfonic acid group can be synthesized also by previously synthesizing polyarylene having a structural unit having skeleton represented by the formula (A) but having neither sulfonic acid group nor sulfonic ester group and having a structural unit represented by the formula (B) and then sulfonating this polymer.

In the case where a monomer capable of becoming a structural unit of the formula (A) (e.g., monomer represented by the following formula (D), also referred to as a "monomer (D)") and an oligomer capable of becoming a structural unit of the formula (B) (e.g., oligomer represented by the following formula (E), also referred to as an "oligomer (E)") are copolymerized to synthesize polyarylene having a sulfonic ester group, the monomer (D) employable herein is, for example, a sulfonic ester represented by the following formula (D).

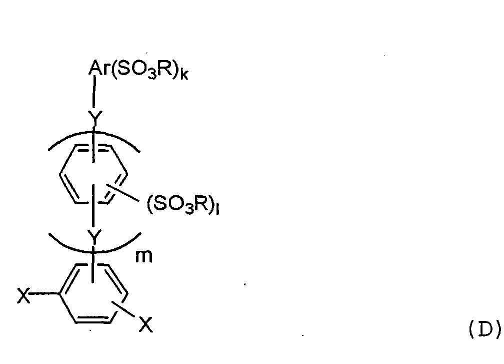

In the formula (D), X is an atom or a group selected from halogen atoms other than a fluorine atom (chlorine, bromine, iodine) and -OSO₂Z (Z is an alkyl group, a fluorine-substituted alkyl group or an aryl group).

In the formula (D), Y, Ar, m, k and 1 have the same meanings as those of Y, Ar, m, k and 1 in the formula (A), when m is 1 to 10, each Y may be the same or different, and k+1≥1.

In the formula (D), R is a hydrocarbon group of 4 to 20 carbon atoms. Examples of such groups include straight-chain hydrocarbon groups, branched hydrocarbon groups and alicyclic hydrocarbon groups, such as tert-butyl, isobutyl, n-butyl, sec-butyl, neopentyl, cyclopentyl, hexyl, cyclohexyl, cyclopentylmethyl, cyclohexylmethyl, adamantyl, adamantanemethyl, 2-ethylhexyl, bicyclo[2.2.1]heptyl and bicyclo[2.2.1]heptylmethyl. Of these ester groups, substituents which are derived from primary alcohol and are bulky, such as those of branched or alicyclic structure, are preferable from the viewpoint of stability in the polymerization process.

Examples of the sulfonic esters represented by the formula (D) include the following compounds.

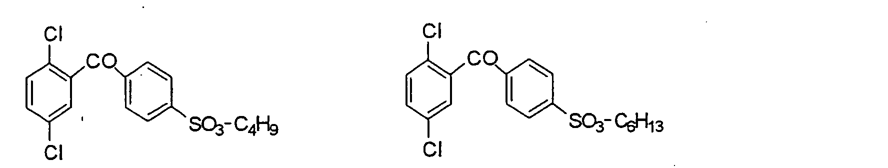

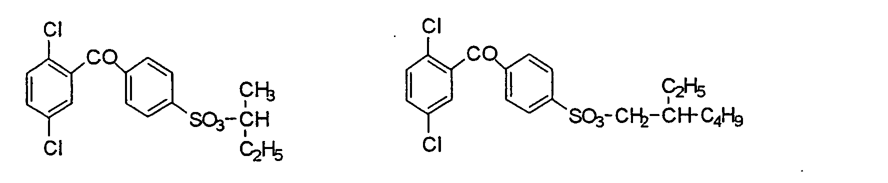

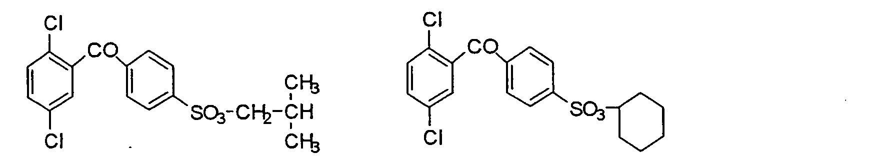

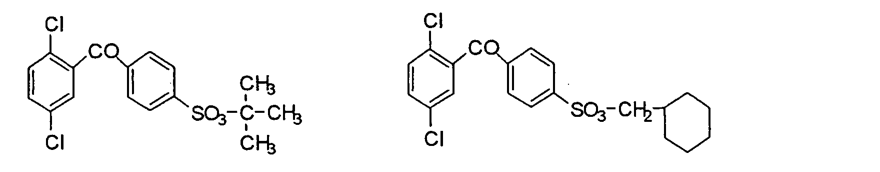

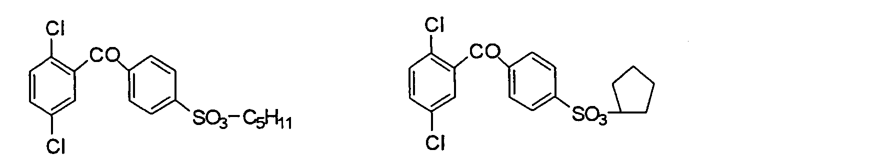

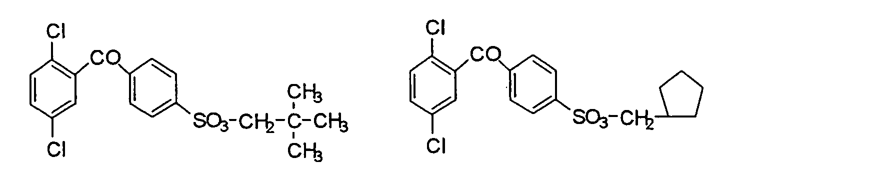

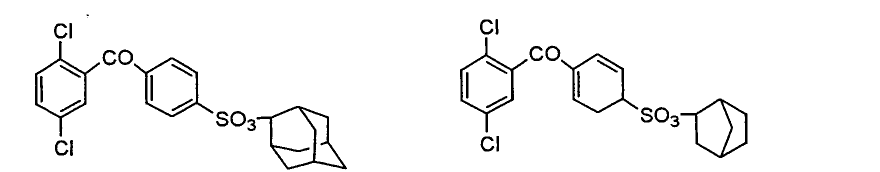

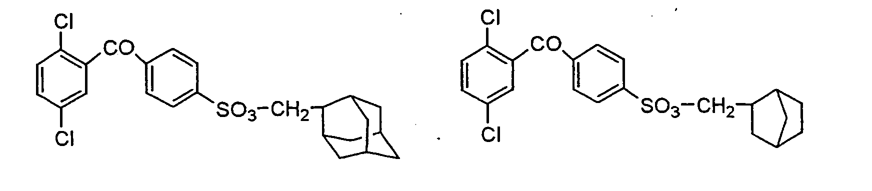

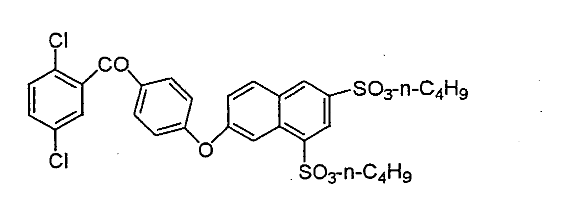

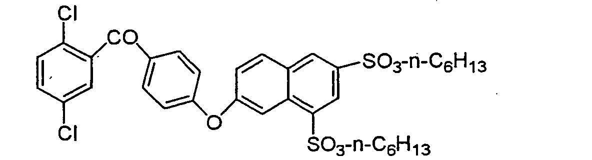

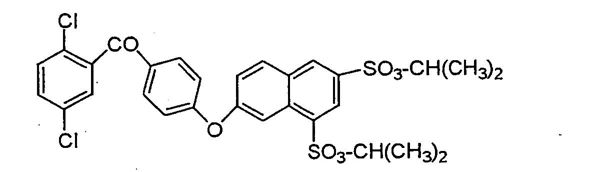

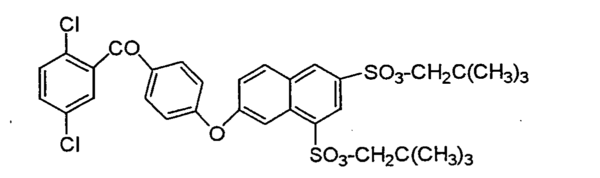

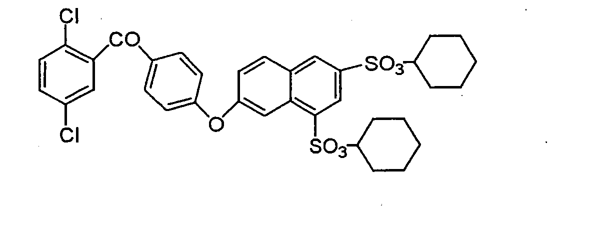

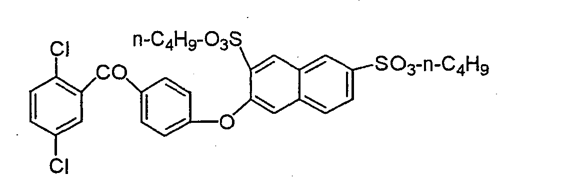

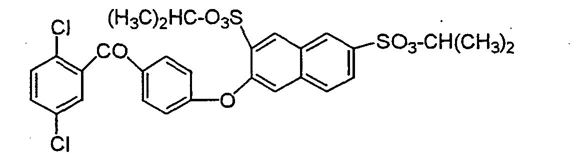

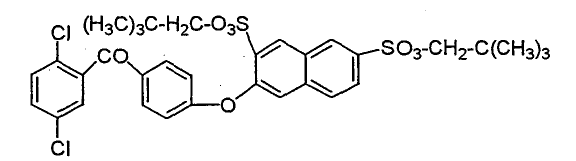

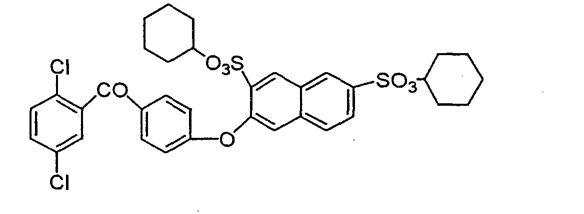

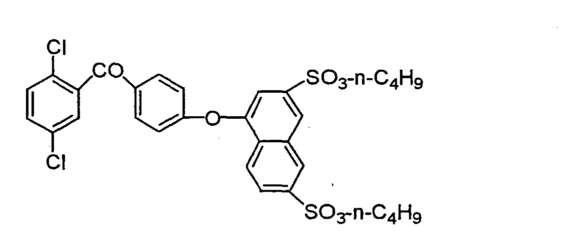

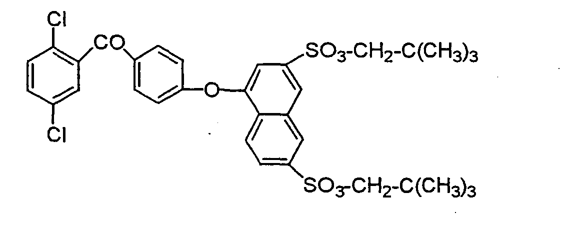

Examples of the compounds having the same skeleton as that of the monomer (D) represented by the formula (D) but having neither sulfonic acid group nor sulfonic ester group include the following compounds.

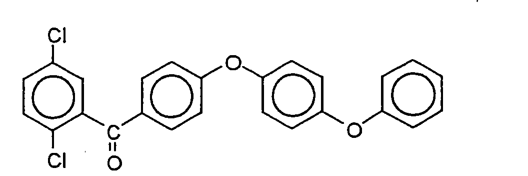

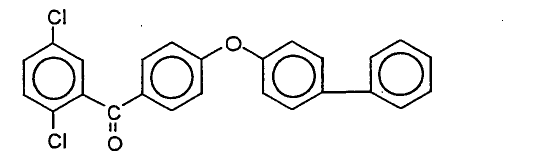

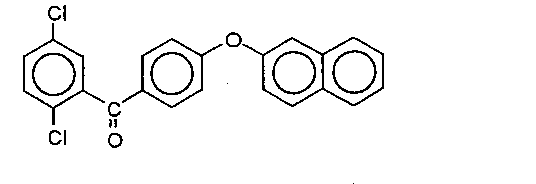

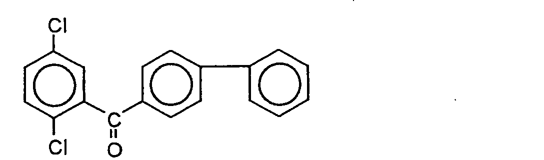

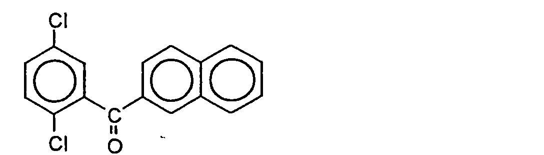

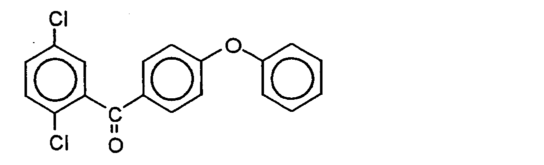

The oligomer (E) employable is, for example, a compound represented by the following formula (E).

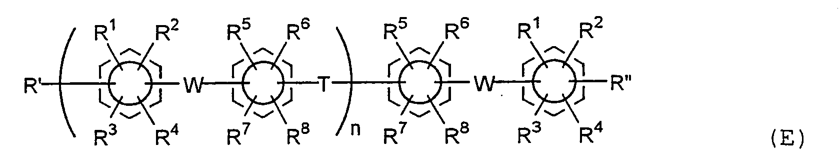

In the formula (E), R' and R" may be the same or different and are each a halogen atom other than a fluorine atom or a group represented by -OSO₂Z (Z is an alkyl group, a fluorine-substituted alkyl group or an aryl group). The alkyl group indicated by Z is, for example, methyl or ethyl. The fluorine-substituted alkyl group is, for example, trifluoromethyl. The aryl group is, for example, phenyl or p-tolyl.

In the formula (E), R¹ to R⁸ may be the same or different and are each the same atom or group as that for R¹ to R⁸ in the formula (B). n is an integer of 2 or more, and the upper limit is usually 100, preferably 10 to 80.

Examples of the compounds represented by the formula (E) include compounds represented by the following formulas.

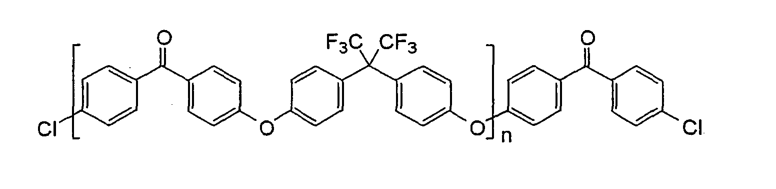

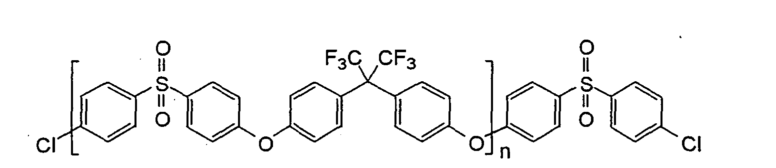

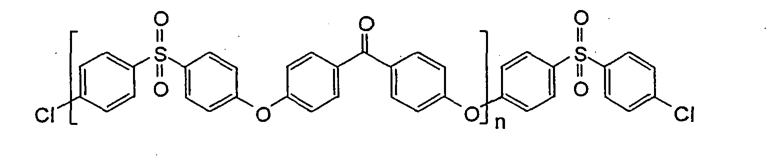

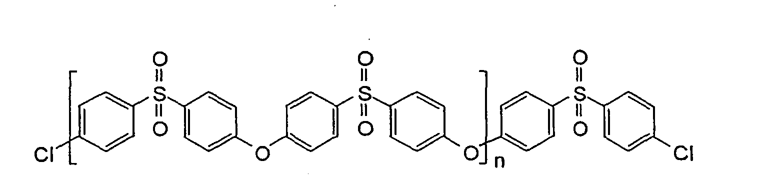

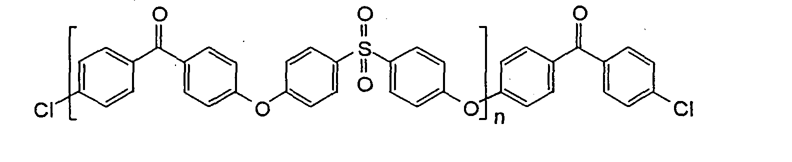

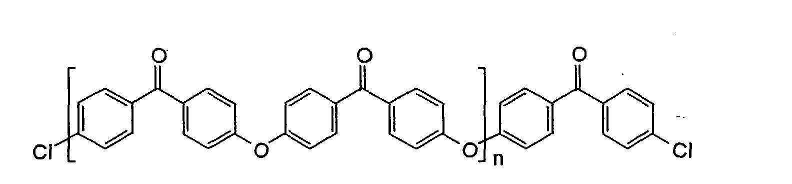

The oligomer (E) can be synthesized by, for example, the following process.

First, in order to convert bisphenol to the corresponding alkali metal salt ofbisphenol, an alkali metal, such as lithium, sodium or potassium, alkali metal hydride, alkali metal hydroxide, alkali metal carbonate or the like is added to bisphenol in a polar solvent of high dielectric constant, such as N-methyl-2-pyrrolidone, N,N-dimethylacetamide, sulfolane, diphenylsulfone or dimethyl sulfoxide. Examples of the bisphenols include 2,2-bis(4-hydroxyphenyl)-1,1,1,3,3,3-hexafluoropropane, 2,2-bis(4-hydroxyphenyl)ketone, 2,2-bis(4-hydroxyphenyl)sulfone, 9,9-bis(4-hydroxyphenyl)fluorene, 9,9-bis(4-hydroxy-3-phenylphenyl)fluorene, 9,9-bis(4-hydroxy-3,5-diphenylphenyl)fluorene, 2-phenylphenol, 4,4'-bis(4-hydroxyphenyl)diphenylmethane, 4,4'-bis(4-hydroxy-3-phenylphenyl)diphenylmethane, 4,4'-bis(4-hydroxy-3,5-diphenylphenyl)diphenylmethane and 2-phenylhydroquinone.

The alkali metal is usually reacted rather in excess with a hydroxyl group of phenol, and the alkali metal is usually used in an amount of 1.1 to 2 times by equivalent, preferably 1.2 to 1.5 times by equivalent. In the reaction, a solvent that is azeotropic with water, such as benzene, toluene, xylene, hexane, cyclohexane, octane, chlorobenzene, dioxane, tetrahydrofuran, anisole or phenetole, is allowed to be present, and an aromatic dihalide compound that is activated by an electron withdrawing group and substituted with a halogen atom, such as fluorine or chlorine, is reacted. Examples of such aromatic dihalide compounds include 4,4'-difluorobenzophenone, 4,4'-dichlorobenzophenone, 4,4'-chlorofluorobenzophenone, bis(4-chlorophenyl)sulfone, bis(4-fluorophenyl)sulfone, 4-fluorophenyl-4'-chlorophenylsulfone, bis(3-nitro-4-chlorophenyl)sulfone, 2,6-dichlorobenzonitrile, 2,6-difluorobenzonitrile, hexafluorobenzene, decafluorobiphenyl, 2,5-difluorobenzophenone and 1,3-bis(4-chlorobenzoyl)benzene. From the viewpoint of reactivity, a fluorine compound is preferable, but taking the subsequent aromatic coupling reaction into consideration, it is necessary to conduct the aromatic nucleophilic displacement reaction so that the end should become a chlorine atom. For example, the displacement reaction is carried out using an active aromatic halogen compound, such as 4,4'-dichlorobenzophenone or bis(4-chlorophenyl)sulfone, or using 4,4'-difluorobenzophenone and 4,4'-chlorofluorobenzophenone in combination, whereby the aimed compound is obtained.

The amount of the active aromatic dihalide used can be changed according to the molecular weight of the aimed oligomer.

Prior to the aromatic nucleophilic displacement reaction, an alkali metal salt of bisphenol may be formed. The reaction temperature is in the range of 60°C to 300°C, preferably 80°C to 250°C. The reaction time is in the range of 15 minutes to 100 hours, preferably 1 hour to 24 hours.

The polyarylene having a sulfonic ester group is synthesized by reacting the monomer (D) with the oligomer (E) in the presence of a catalyst, and the catalyst used herein is a catalyst system containing a transition metal compound. This catalyst system contains, as essential components, (1) a transition metal salt and a compound that becomes a ligand (referred to as a "ligand component" hereinafter), or a transition metal complex (including a copper salt) in which a ligand is coordinated, and (2) a reducing agent. This catalyst system may further contain a "salt" to increase a polymerization rate.

Examples of the transition metal salts include nickel compounds, such as nickel chloride, nickel bromide, nickel iodide and nickel acetylacetonate; palladium compounds, such as palladium chloride, palladium bromide and palladium iodide; iron compounds, such as iron chloride, iron bromide and iron iodide; and cobalt compounds, such as cobalt chloride, cobalt bromide and cobalt iodide. Of these, nickel chloride, nickel bromide and the like are particularly preferable.

Examples of the ligand components include triphenylphosphine, 2,2'-bipyridine, 1,5-cyclooctadiene and 1,3-bis(diphenylphosphino)propane. Of these, triphenylphosphine and 2,2'-bipyridine are preferable. The compounds which are the ligand components can be used singly or in combination of two or more kinds.

Examples of the transition metal complexes in which a ligand is coordinated include bis(triphenylphosphine)nickel chloride, bis(triphenylphosphine)nickel bromide, bis(triphenylphosphine)nickel iodide, bis(triphenylphosphine)nickel nitrate, (2,2'-bipyridine)nickel chloride, (2,2'-bipyridine)nickel bromide, (2,2'-bipyridine)nickel iodide, (2,2'-bipyridine)nickel nitrate, bis(1,5-cyclooctadiene)nickel, tetrakis(triphenylphosphine)nickel, tetrakis(triphenyl phosphite)nickel and tetrakis(triphenylphosphine)palladium. Of these, bis(triphenylphosphine)nickel chloride and (2,2'-bipyridine)nickel chloride are preferable.

Examples of the reducing agents employable in the catalyst system include iron, zinc, manganese, aluminum, magnesium, sodium and calcium. Of these, zinc, magnesium and manganese are preferable. These reducing agents can be used after they are brought into contact with acids such as organic acids to be further activated.

Examples of the "salts" employable in the catalyst system include sodium compounds, such as sodium fluoride, sodium chloride, sodium bromide, sodium iodide and sodium sulfate; potassium compounds, such as potassium fluoride, potassium chloride, potassium bromide, potassium iodide and potassium sulfate; and ammonium compounds, such as tetraethylammonium fluoride, tetraethylammonium chloride, tetraethylammonium bromide, tetraethylammonium iodide and tetraethylammonium sulfate. Of these, sodium bromide, sodium iodide, potassium bromide, tetraethylammonium bromide and tetraethylammonium iodide are preferable.

The.amounts of the above components used are as follows. The transition metal salt or the transition meal complex is used in an amount of usually 0.0001 to 10 mol, preferably 0.01 to 0.5 mol, based on 1 mol of the total of the above monomers ((D)+(E), the same shall apply hereinafter). If the amount thereof is less than 0.0001 mol, the polymerization reaction does not proceed sufficiently in some cases. If the amount thereof exceeds 10 mol, the molecular weight is sometimes lowered.

In the case where the transition metal salt and the ligand component are used in the catalyst system, the amount of the ligand component used is in the range of usually 0.1 to 100 mol, preferably 1 to 10 mol, based on 1 mol of the transition metal salt. If the amount of the ligand component is less than 0.1 mol, the catalyst activity sometimes becomes insufficient. If the amount thereof exceeds 100 mol, the molecular weight is sometimes lowered.

The reducing agent is used in an amount of usually 0.1 to 100 mol, preferably 1 to 10 mol, based on 1 mol of the total of the monomers. If the amount of the reducing agent is less than 0.1 mol, the polymerization reaction does not proceed sufficiently in some cases. If the amount thereof exceeds 100 mol, purification of the resulting polymer sometimes becomes difficult.

In the case where the "salt" is used, the amount of the salt used is in the range of usually 0.001 to 100 mol, preferably 0.01 to 1 mol, based on 1 mol of the total of the monomers. If the amount of the salt is less than 0.001 mol, the effect of promoting polymerization rate is sometimes insufficient. If the amount thereof exceeds 100 mol, purification of the resulting polymer sometimes becomes difficult.

Examples of the polymerization solvents employable in the reaction of the monomer (D) with the oligomer (E) include tetrahydrofuran, cyclohexanone, dimethyl sulfoxide, N,N-dimethylformamide, N,N-dimethylacetamide, N-methyl-2-pyrrolidone, γ-butyrolactone and N,N'-dimethylimidazolidinone. Of these, tetrahydrofuran, N,N-dimethylformamide, N,N-dimethylacetamide, N-methyl-2-pyrrolidone and N,N'-dimethylimidazolidinone are preferable. It is preferable to use these polymerization solvents after they are sufficiently dried.

The concentration of the total of the monomers in the polymerization solvent is in the range of usually 1 to 90% by weight, preferably 5 to 40% by weight.

The polymerization temperature is in the range of usually 0 to 200°C, preferably 50 to 120°C, and the polymerization time is in the range of usually 0.5 to 100 hours, preferably 1 to 40 hours.

The polyarylene having a sulfonic ester group obtained by the use of the monomer (D) can be converted to polyarylene having a sulfonic acid group by hydrolyzing the sulfonic ester group to convert it to a sulfonic acid group.

The hydrolysis can be carried out by, for example, the following processes.
(1) Into an excess of water or alcohol containing a small amount of hydrochloric acid, the polyarylene having a sulfonic ester group is introduced, and they are stirred for 5 minutes or more.
(2) In trifluoroacetic acid, the polyarylene having a sulfonic ester group is reacted for about 5 to 10 hours at a temperature of about 80 to 120°C.
(3) In a solution containing lithium bromide in an amount of 1 to 3 times by mol to 1 mol of the sulfonic ester group (-SO₃R) in the polyarylene having a sulfonic ester group, e.g., a solution of N-methylpyrrolidone, the polyarylene is reacted for about 3 to 10 hours at a temperature of about 80 to 150°C, and then hydrochloric acid is added.

The polyarylene having a sulfonic acid group can be synthesized also by previously synthesizing polyarylene by the use of a monomer having skeleton similar to that of the monomer (D) represented by the formula (D) but having no sulfonic ester group and then sulfonating the resulting polyarylene. In this case, the monomer having no sulfonic acid group and the oligomer (E) are copolymerized in accordance with the above synthesis processes to prepare polyarylene, and then a sulfonic acid group is introduced into the polyaryene having no sulfonic acid group using a sulfonating agent, whereby poyarylene having a sulfonic acid group can be obtained.

The sulfonation reaction conditions are as follows. Into the polyarylene having no sulfonic acid group, a sulfonic acid group is introduced in a conventional way using a sulfonating agent in the absence or presence of a solvent.

For introducing a sulfonic acid group, for example, the polyarylene having no sulfonic acid group is subjected to sulfonation under the publicly known conditions using a conventional sulfonating agent, such as sulfuric anhydride, fuming sulfuric acid, chlorosulfonic acid, sulfuric acid or sodium hydrogensulfite (Polymer Preprints, Japan, Vol. 42, No. 3, p. 730 (1993); Polymer Preprints, Japan, Vol. 43, No. 3, p. 736 (1994); Polymer Preprints, Japan, Vol. 42, No. 7, pp. 2490-2492 (1993)).

That is to say, the polymer having no sulfonic acid group is reacted with the above-mentioned sulfonating agent in the absence or presence of a solvent. Examples of the solvents include hydrocarbon solvents, such as n-hexane; ether solvents, such as tetrahydrofuran and dioxane; non-proton polar solvents, such as dimethylacetamide, dimethylformamide and dimethyl sulfoxide; and halogenated hydrocarbons, such as tetrachloroethane, dichloroethane, chloroform and methylene chloride. Although the reaction temperature is not specifically restricted, it is in the range of usually -50 to 200°C, preferably -10 to 100°C. The reaction time is in the range of usually 0.5 to 1,000 hours, preferably 1 to 200 hours.

The amount of the sulfonic acid group contained in the polyarylene having a sulfonic acid group prepared by the above process is in the range of usually 0.3 to 5 meq/g, preferably 0.5 to 3 meq/g, more preferably 0.8 to 2.8 meq/g. If the amount of the sulfonic acid group is less then 0.3 meq/g, the proton conductivity is low, and therefore, the polyarylene is not practically useful. If the amount thereof exceeds 5 meq/g, water resistance is markedly lowered, so that such an amount is unfavorable.

The amount of the sulfonic acid group can be controlled by changing the types of the monomer (D) and the oligomer (E), the amounts thereof, and the combination thereof.

The polyarylene having a sulfonic acid group obtained as above has a weight-average molecular weight in terms of polystyrene, as determined by gel permeation chromatography (GPC), of 10,000 to 1,000,000, preferably 20,000 to 800,000.

To the polyarylene having a sulfonic acid group, an antioxidant, preferably a hindered phenol compound having a molecule weight of not less than 500 may be added. By the addition of the antioxidant, durability of an electrolyte for electrode can be further improved.

Examples of the hindered phenol compounds having a molecular weight of not less than 500 employable in the present invention include triethylene glycol-bis[3-(3-t-butyl-5-methyl-4-hydroxyphenyl) propionate] (trade name: IRGANOX 245), 1,6-hexanediol-bis[3-(3,5-di-t-butyl-4-hydroxyphenyl) propionate] (trade name: IRGANOX 259), 2,4-bis(n-octylthio)-6-(4-hydroxy-3,5-di-t-butylanilino)-3,5-triazine (trade name: IRGANOX 565), pentaerythrithyltetrakis[3-(3,5-di-t-butyl-4-hydroxyphenyl) propionate] (trade name: IRGANOX 1010),-2,2-thio-diethylenebis[3-(3,5-di-t-butyl-4-hydroxphenyl) propionate] (trade name: IRGANOX 1035), octadecyl-3-(3,5-di-t-butyl-4-hydroxyphenyl) propionate (trade name: IRGANOX 1076), N,N-hexamethylenebis(3,5-di-t-butyl-4-hydroxyhydrocynnamamide) (trade name: IRGANOX 1098), 1,3,5-trimethyl-2,4,6-tris(3,5-di-t-butyl-4-hydroxybenzyl)benzene (trade name: IRGANOX 1330), tris-(3,5-di-t-butyl-4-hydroxybenzyl) isocyanurate (trade name: IRGANOX 3114) and 3,9-bis[2-[3-(3-t-butyl-4-hydroxy-5-methylphenyl)propionyloxy]-1,1-dimethylethyl]-2,4,8,10-tetraoxaspiro[5.5]undecane (trade name: Sumilizer GA-80).

In the present invention, it is preferable to use the hindered phenol compound having a molecular weight of not less than 500 in an amount of 0.01 to 10 parts by weight based on 100 parts by weight of the polyarylene having a sulfonic acid group.

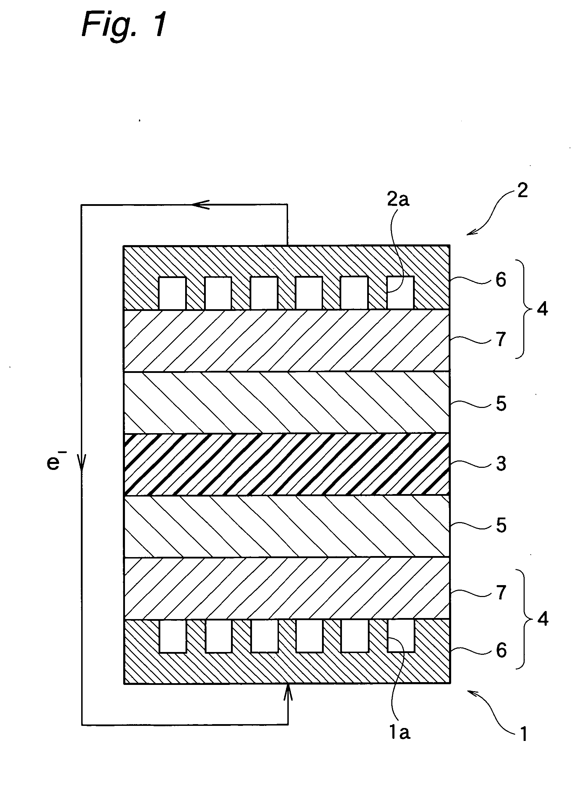

Next, the solid polymer fuel cell of the present invention is described with reference to the attached drawings. Fig. 1 is an explanatory sectional view showing an example of constitution of a membrane-electrode structure used in the solid polymer fuel cell.

The solid polymer fuel cell has a membrane-electrode structure of, for example, such a constitution as shown in Fig. 1. The membrane-electrode structure has a polyelectrolyte membrane 3 between an oxygen electrode 1 and a fuel electrode 2. Each of the oxygen electrode 1 and the fuel electrode 2 has a diffusion layer 4 and an electrode catalyst layer 5 formed on the diffusion layer 4, and is in contact with the polyelectrolyte membrane 3 on the side of the electrode catalyst layer 5. The electrode catalyst layer 5 contains the aforesaid polyarylene having a sulfonc acid group. The diffusion layer 4 is constituted of carbon paper 6 and a substrate layer 7.

In the membrane-electrode structure, the substrate layer 7 is formed by, for example, coating one surface of the carbon paper 6 with a slurry obtained by homogeneously dispersing a mixture of carbon black and polytetrafluoroethylene (PTFE) in a given ratio by weight, in an organic solvent such as ethylene glycol and drying the slurry. The carbon paper 6 in the oxygen electrode 1 has, on the substrate layer side, oxygen passageways 1a through which an oxygen-containing gas such as air passes, and the carbon paper 6 in the fuel electrode 2 has, on the substrate layer side, fuel gas passageways 2a through which a fuel gas such as hydrogen passes. The electrode catalyst layer 5 is formed by, for example, coating the substrate layer 7 with a catalyst paste obtained by homogeneously mixing a carbon black supporting a hydrogen reduction catalyst with an ion-conductive binder and drying the catalyst paste.

The oxygen electrode 1, the polyelectrolyte membrane 3 and the fuel electrode 2 are hot pressed in such a state that the polyelectrolyte membrane 3 is sandwiched between the electrode catalyst layer 5 of the oxygen electrode 1 and the electrode catalyst layer 5 of the fuel electrode 2, whereby the membrane-electrode structure is formed.

As the polyelectrolyte membrane 3 of the present invention, the membrane made from polyarylene having a sulfonic acid group used for a binder of the electrode catalyst layer of the present invention can be used.

The membrane made from perfluoroalkylenesufonic acid polymer compound or sufonic acid containing polymer compound prepared by introducing sulfonic acid group to the engineering plastics such as polyetheretherketone, polyetherketone, polysulfone, polyethersulfone, polyether, polyimide, polyazole or polyphenylene sulfide can also be used.

Moreover, the porous substrate impregnated with the sulfonic acid containing polymer compound can be used.

The hydrogen reduction catalyst supported on the carbon black for use as the catalyst paste of the present invention is preferably a noble metal catalyst, such as platinum, palladium, gold, ruthenium or iridium. The hydrogen reduction catalyst may contain two or more such elements; that is, alloys and mixtures of these noble metal catalysts are also available.

As the carbon black to support the above hydrogen reduction catalyst of the present invention, oil furnace blacks, channel blacks, lamp blacks, thermal blacks and acetylene blacks are preferable due to their good electron conductivities and large specific surface areas.

The oil furnace blacks include those carbon blacks commercially available under the trademarks of VULCAN XC-72, VULCAN P, BLACK PEARLS 880, BLACK PEARLS 1100, BLACK PEARLS 1300, BLACK PEARLS 2000, REGAL 400 (all available from Cabot Corporation), KETJENBLACK EC (available from Lion Corporation), and product Nos. 3150 and 3250 of Mitsubishi Chemical Corporation. The acetylene blacks include DENKA BLACK™ (available from Denki Kagaku Kogyo K.K.).

Furthermore, natural graphites, pitches, cokes, carbon and synthetic graphites obtained from organic compounds such as polyacrylonitriles, phenolic resins and furan resins, may also be used.

The present invention is characterized in that the aforementioned polyarylene having a sulfonic acid group is used as ion-conductive polymer in the catalyst paste.

The catalyst paste can be prepared by mixing the carbon black supporting a hydrogen reduction catalyst and polyarylene having a sulfonic acid group with a solvent. Aprotic dipolar solvent etc. or a mixture of the solvent with water may be used as the solvent.

In the catalyst paste, the ratio of the carbon black supporting a hydrogen reduction catalyst/ polyarylene having a sulfonic acid group (by weight) is 40/60-95/5, preferably 55/45-85/15.

The solid content comprising the carbon black supporting a hydrogen reduction catalyst and polyarylene having a sulfonic acid group is usually 2-40% by weight, preferably 5-30% by weight.

When the catalyst paste is applied on a substrate layer or other substrate, the application methods include brushing, brush coating, bar coating, knife coating, screen printing and spray coating. Alternatively, the catalyst paste may be applied on a substrate (transfer substrate) and thereafter the thus-formed electrode catalyst layer may be transferred onto an electrode substrate or a proton conductive layer. The transfer substrate may be a polytetrafluoroethylene (PTFE) sheet or a glass or metal plate whose surface has been treated with a releasing agent.

The electrode substrate constituting an oxygen electrode or a fuel electrode for use in the present invention is not particularly limited and may be selected from those electrode substrates generally used in fuel cells. Examples thereof include porous conductive sheets mainly composed of conductive substances. The conductive substances include calcined polyacrylonitriles, calcined pitches, carbon materials such as graphites and expanded graphites, stainless steel, molybdenum and titanium. The conductive substances may exist in the form of fibers or particles, but are not limited thereto. Fibrous conductive inorganic substances (inorganic conductive fibers), particularly carbon fibers, are preferable. The porous conductive sheets made of such inorganic conductive fibers may be woven or nonwoven fabrics. The woven fabrics may be, although not particularly limited to, plain fabrics, twill fabrics, satin fabrics, designed fabrics and figured fabrics. The nonwoven fabrics may be, although not particularly limited to, felted nonwoven fabrics, needle punched nonwoven fabrics, spunbonded nonwoven fabrics, water jet punched nonwoven fabrics and meltblown nonwoven fabrics. Knitted fabrics are also usable. These fabrics, particularly when using carbon fibers, are preferably woven fabrics obtained through carbonization or graphitization of plain fabrics of flame-resistant spun yarns, or nonwoven fabrics obtained through carbonization or graphitization of needle punched or water jet punched nonwoven fabrics of flame-resistant yarns, or nonwoven mats obtained by papermaking technique for flame-resistant yarns, carbonized yarns or graphitized yarns. As the carbon paper, carbon paper TGP series and SO series (available from Toray Industries, Inc.) and carbon cloths produced by E-TEK may be preferably used. According to a preferred embodiment of the present invention, conductive particles such as carbon blacks, or conductive fibers such as carbon fibers may be incorporated in the porous conductive sheet used in the present invention.

### EFFECT OF THE INVENTION

According to the present invention, an electrode for a fuel cell which exhibits excellent electricity generation performance can be provided. Furthermore, the polyarylene having a sulfonic acid group does not contain halogen atoms such as a fluorine atom in its molecular structure or contains them in extremely decreased amounts, so that recovery of a catalyst metal can be easily made.

### EXAMPLES

The present invention is further described with reference to the following examples, but it should be construed that the present invention is in no way limited to those examples.

In the following examples, equivalent of sulfonic acid, molecular weight and proton conductivity were determined in the following manner.

### 1. Equivalent of sulfonic acid

The polymer having a sulfonic acid group was washed with water until the wash water became neutral, that is, the polymer was sufficiently washed with water to remove an acid freely remaining. After drying, a given amount of the polymer was weighed out. Using as an indicator phenolphthalein dissolved in a THF/water mixed solvent and using a standard solution of NaOH, titration was carried out, and from the point of neutralization, equivalent of sulfonic acid was determined.

### 2. Measurement of molecular weight

As a weight-average molecular weight of polyarylene having no sulfonic acid group, a molecular weight in terms of polystyrene was determined by GPC using tetrahydrofuran (THF) as a solvent. As a molecular weight of polyarylene having a sulfonic acid group, a molecular weight in terms of polystyrene was determined by GPC using a solvent of N-methyl-2-pyrrolidone (NMP) containing lithium bromide and phosphoric acid as an eluting solution.

### 3. Measurement of proton conductivity

An alternating-current resistance was determined as follows. Platinum wires (f = 0.5 mm) were pressed against a surface of a proton-conductive membrane sample in the form of a strip having a width of 5 mm. The sample was held in a constant-temperature constant-humidity apparatus, and an alternating-current impedance between platinum wires was measured to determine proton conductivity. That is to say, an impedance at an alternating current of 10 kHz in the environment of a temperature of 25°C or 60°C and a relative humidity of 80% was measured. As a resistance measuring device, a chemical impedance measuring system manufactured by NF Corporation was used, and as a constant-temperature constant-humidity apparatus, JW 241 manufactured by Yamato Scientific Co., Ltd. was used. Five platinum wires were pressed at intervals of 5 mm, and the distance between wires (wire distance) was changed between 5 and 20 mm to measure alternating-current resistance. From the wire distance and the gradient of resistance, specific resistance of the membrane was calculated, then from the reciprocal number of the specific resistance, an alternating-current impedance was calculated, and from this impedance, proton conductivity was calculated.

Specific resistance R (Ω·cm) = 0.5 (cm) × membrane thickness (cm) × resistance wire gradient (Ω/cm)

### Synthesis Example 1

### Preparation of oligomer

In a 1 liter three-necked flask equipped with a stirrer, a thermometer, a cooling tube, a Dean-Stark tube and a three-way cock for feeding nitrogen, 67.3 g (0.20 mol) of 2,2-bis(4-hydroxyphenyl)-1,1,1,3,3,3-hexafluoropropane (bisphenol AF), 60.3 g (0.24 mol) of 4,4'-dichlorobenzophenone (4,4'-DCBP), 71.9 g (0.52 mol) of potassium carbonate, 300 ml of N,N-dimethylacetamide (DMAc) and 150 ml of toluene were placed, and they are heated in a nitrogen atmosphere in an oil bath, followed by reaction at 130°C with stirring. Water produced by the reaction was subjected to azeotropic distillation by the use of toluene, and with removing the water from the system by means of the Dean-stark tube, the reaction was continued. As a result, production of water was hardly observed in about 3 hours. With slowly raising the reaction temperature up to 150°C from 130°C, most of toluene was removed, and the reaction was continued for 10 hours at 150°C. Then, 10.0 g (0.040 mol) of 4,4'-DCBP was added, and the reaction was further continued for 5 hours. After the reaction solution obtained was allowed to stand to cool, a precipitate of an inorganic compound formed as a by-product was removed by filtration, and the filtrate was introduced into 4 liters of methanol. A product precipitated was filtered off, recovered, dried and then dissolved in 300 ml of tetrahydrofuran. The resulting solution was reprecipitated in 4 liters of methanol to obtain 95 g (yield: 85%) of an aimed compound.

The resulting polymer had a weight-average molecular weight in terms of polystyrene, as determined by GPC (THF solvent), of 11,200. This polymer was soluble in THF, NMP, DMAc, sulfolane, etc., and had Tg of 110°C and a thermal decomposition temperature of 498°C.

The resulting compound was an oligomer represented by the following formula (I) (referred to as a "BCPAF oligomer" hereinafter).

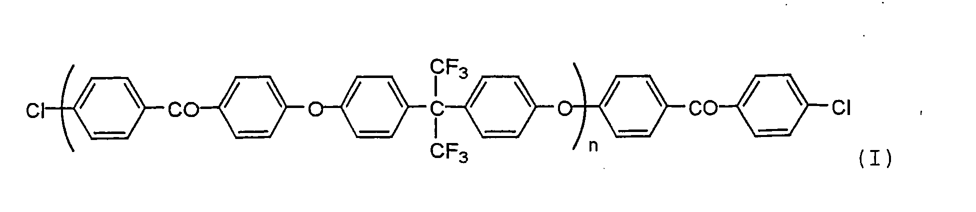

### Synthesis Example 2

### Preparation of polyarylene copolymer having neopentyl group as protective group (PolyAB-SO₃neo-Pe)

In a 500 ml three-necked flask equipped with a stirrer, a thermometer, a cooling tube, a Dean-Stark tube and a three-way cock for feeding nitrogen, 39.58 g (98.64 mmol) of neopentyl 4-[4-(2,5-dichlorobenzoyl)phenoxy]benzenesulfonate (A-SO₃neo-Pe), 15.23 g (0.136 mmol) of the BCPAF oligomer (Mn = 11200), 1.67 g (0.26 mmol) of Ni(PPh₃)₂Cl₂, 10.49 g (4.00 mmol) of PPh₃, 0.45 g (0.30 mmol) of NaI, 15.69 g (24.0 mmol) of a zinc powder and 129 ml of dry NMP were placed in a nitrogen atmosphere. The reaction system was heated (finally up to 75°C) with stirring, and the reaction was conducted for 3 hours. The polymerization reaction solution was diluted with 250 ml of THF, stirred for 30 minutes and filtered using Celite as a filter aid. The filtrate was poured into a large excess (1500 ml) of methanol and thereby solidified. The resulting solids were collected by filtration, air-dried and then redissolved in THF/NMP (200/300 ml), followed by solidification and precipitation by the use of a large excess (1500 ml) of methanol. The precipitate was air-dried and then heated to dryness to obtain 47.0 g (yield: 92%) of an aimed yellow fibrous copolymer (PolyAB-SO₃neo-Pe) having a sulfonic acid derivative protected by a neopentyl group. This copolymer had Mn and Mw, as determined by GPC, of 47,600 and 159,000, respectively.

Then, 5.1 g of the thus obtained PolyAB-S0₃neo-Pe was dissolved in 60 ml of NMP, and the solution was heated to 90°C. To the reaction system, a mixture of 50 ml of methanol and 8 ml of concentrated hydrochloric acid was added at a time, and the resulting mixture in a suspension state was reacted for 10 hours under mild reflux conditions. Then, a distillation apparatus was installed, and excess methanol was distilled off to obtain a light green transparent solution. The solution was poured into a large amount of water/methanol (1/1, by weight) to solidify a polymer, and the polymer was washed with ion-exchanged water until pH of the wash liquid became 6 or more. From an IR spectrum of the resulting polymer and quantitative analysis of ion-exchange capacity, it was confirmed that the sulfonic ester group (-SO₃R) had been quantitatively converted to a sulfonic acid group (-SO₃H).

The resulting polyarylene copolymer having a sulfonic acid group had Mn and Mw, as determined by GPC, of 53,200 and 185,000, respectively, and the equivalent of sulfonic acid was 2.2 meq/g.

### Synthesis Example 3

### Synthesis of polyarylene copolymer

In a flask, 28.1 g (2.5 mmol) of the oligomer of the formula (I) obtained in Synthesis Example 1, 35.9 g (82.5 mmol) of 2,5-dichloro-4'-(4-phenoxy)phenoxybenzophenone (DCPPB) , 1.67 g (2.6 mmol) of bis(triphenylphosphine)nickel dichloride, 1.66 g (11.1 mmol) of sodium iodide, 8.92 g (34.0 mmol) of triphenylphosphine and 13.3 g (204 mmol) of a zinc powder were placed, and the flask was purged with dry nitrogen. Then, 160 ml of N-methyl-2-pyrrolidone was added, and the mixture was heated to 80°C and stirred for 4 hours to conduct polymerization. The polymerization solution was diluted with THF, followed by solidification by the use of hydrochloric acid/methanol. The resulting solids were recovered, washed with methanol repeatedly and dissolved in THF. Then, purification by reprecipitation in methanol was performed. The resulting polymer was collected by filtration and vacuum dried to obtain 51.0 g (yield: 90%) of an aimed copolymer. The copolymer had a number-average molecular weight and a weight-average molecular weight in terms of polystyrene, as determined by GPC (THF), of 38,900 and 160,000, respectively.

### Synthesis of polyarylene having sulfonic acid group

In a 1000 ml separable flask equipped with a stirring device and a thermometer, 50 g of the copolymer obtained above was placed, then 500 ml of sulfuric acid having a concentration of 98% was added, and they were stirred for 24 hours in a stream of nitrogen with maintaining the internal temperature at 25°C. The resulting solution was poured into a large amount of ion-exchanged water to precipitate a polymer. Washing of the polymer was repeated until pH of the wash water became 5. The polymer was dried to obtain 56 g (yield: 95%) of a sulfonic acid group-containing polymer. The copolymer had a number-average molecular weight and a weight-average molecular weight in terms of polystyrene, as determined by GPC (NMP) , of 45,500 and 176,000, respectively. The equivalent of sulfonic acid of the sulfonic acid group-containing polymer was 2.1 meq/g.

### Example 1

First, the polyarylene having a sulfonic acid group synthesized in Synthesis Example 2 was dissolved in N-methyl-2-pyrrolidone, and the solution was subjected to casting to form a polyelectrolyte membrane having a thickness of 40 µm on dry basis.

Then, carbon black and polytetrafluoroethylene (PTFE) were mixed in a weight ratio of 2:3 (carbon black:PTFE), and the mixture was homogeneously dispersed in ethylene glycol to prepare a slurry. The slurry was applied to one surface of carbon paper and dried to give a substrate layer, whereby a diffusion layer consisting of carbon paper and the substrate layer was formed. As the diffusion layer, one diffusion layer for an oxygen electrode and one diffusion layer for a fuel electrode, which had the same constitution, were prepared.

Then, catalyst particles, in which platinum was supported on furnace black having a specific surface area of not less than 800 m²/g in a weight ratio of 1:1 (furnace black:platinum), and an ion-conductive polymer binder obtained by dissolving the polyarylene having a sulfonic acid group synthesized in Synthesis Example 2 in N-methyl-2-pyrrolidone were mixed in a weight ratio of 1:1.25 (catalyst particles:binder) to prepare a catalyst paste. The catalyst paste was screen printed on the substrate layer in such an amount that the amount of platinum became 0.5 mg/cm², then dried at 60°C for 10 minutes and vacuum dried at 120°C to form an electrode having a catalyst layer.

Then, the polyelectrolyte membrane was sandwiched between the electrode catalyst layer of the oxygen electrode and the electrode catalyst layer of the fuel electrode, and they were hot pressed in this state for 4 minutes under the conditions of 160°C and 4 MPa to prepare a membrane-electrode structure for a solid polymer fuel cell.

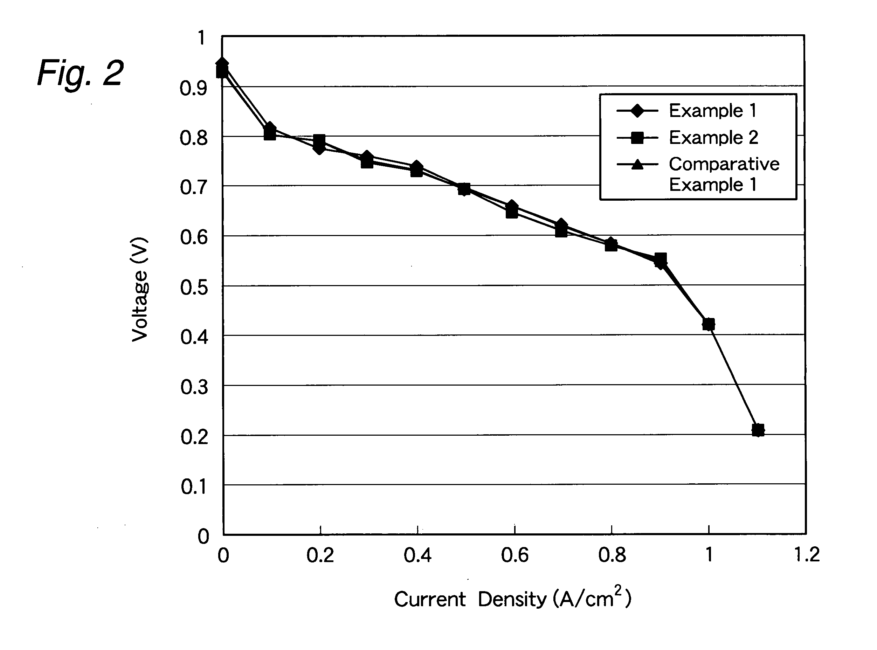

As electricity generation performance of the membrane-electrode structure for a solid polymer fuel cell, variation of voltage (V) with current density (A/cm²) in the environment of a temperature of 80°C and a relative humidity of 90% was measured. The result is shown in Fig. 2.

### Example 2

A membrane-electrode structure for a solid polymer fuel cell was prepared in the same manner as in Example 1, except that the polyarylene having a sulfonic acid group synthesized in Synthesis Example 3 was used for the polyelectrolyte membrane and the ion-conductive polymer binder.

As electricity generation performance of the membrane-electrode structure for a solid polymer fuel cell, variation of voltage (V) with current density (A/cm²) in the environment of a temperature of 80°C and a relative humidity of 90% was measured. The result is shown in Fig. 2.

### Comparative Example 1

A membrane-electrode structure for a solid polymer fuel cell was prepared in the same manner as in Example 1, except that a film made of a perfluoroalkylenesulfonic acid polymer compound (Nafion (trademark) available from DuPont Kabushiki Kaisha) was used as the polyelectrolyte membrane, and an isopropanol/n-propanol solution of the perfluoroalkylenesulfonic acid polymer compound, i.e., an ion-conductive binder, and the catalyst particles are homogeneously mixed to prepare a catalyst paste.

As electricity generation performance of the membrane-electrode structure for a solid polymer fuel cell, variation of voltage (V) with current density (A/cm²) in the environment of a temperature of 80°C and a relative humidity of 90% was measured. The result is shown in Fig. 2.

Disclosed is a membrane-electrode structure for a solid polymer fuel cell comprising a pair of electrode catalyst layers and a polyeletrolyte membrane sandwiched between the electrode catalyst layers, wherein the electrode catalyst layers contain polyarylene having a sulfonic acid group, said polyarylene comprising a recurring unit represented by the following formula (A) and a recurring unit represented by the following formula (B); (A)
wherein Y is a direct bonding or a group selected from a divalent electron withdrawing group and a divalent electron donating group, Ar is a mononuclear or polynuclear aromatic group, m is an integer of 0 to 10, k is an integer of 0 to 5, 1 is an integer of 0 to 4, and k+1≥1; 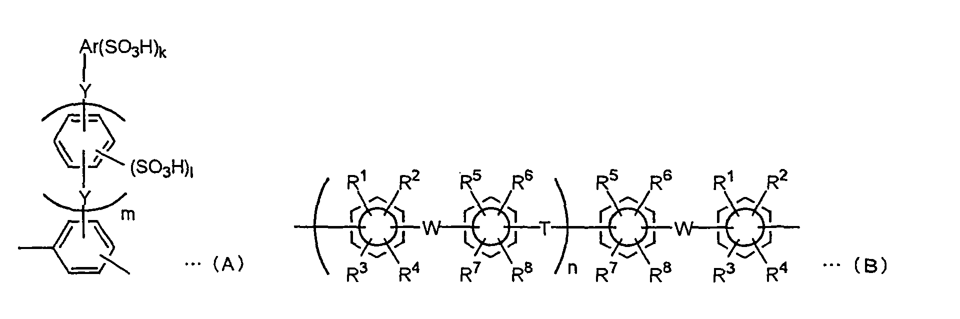 wherein R¹ to R⁸ are each a hydrogen atom, a fluorine atom, an alkyl group, a fluorine-substituted alkyl group, an aryl group or an allyl group, W is a divalent electron withdrawing group or a direct bonding, T is a direct bonding, a divalent electron withdrawing group, a divalent electron donating group or the like, and n is an integer of 2 or more.

The membrane-electrode structure for a solid polymer fuel cell of the present invention exhibits excellent electricity generation performance.

## Claims

1. A membrane-electrode structure for a solid polymer fuel cell comprising a pair of electrode catalyst layers and a polyelectrolyte membrane sandwiched between the electrode catalyst layers, wherein:
the electrode catalyst layers contain polyarylene having a sulfonic acid group, said polyarylene comprising a recurring unit represented by the following formula (A) and a recurring unit represented by the following formula (B) ; 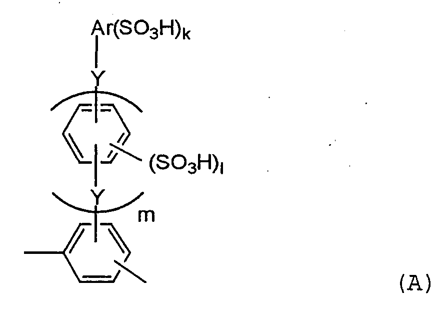
wherein Y is a direct bonding or a group selected from a divalent electron withdrawing group and a divalent electron donating group, Ar is a mononuclear or polynuclear aromatic group, m is an integer of 0 to 10, when m is an integer of 1 to 10, each Y may be the same or different, k is an integer of 0 to 5, 1 is an integer of 0 to 4, and k+1≥1; 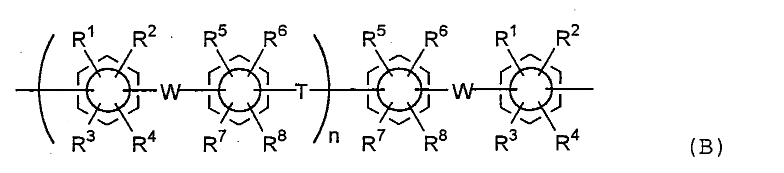 wherein R¹ to R⁸ may be the same or different and are each at least one atom or group selected from the group consisting of a hydrogen atom, a fluorine atom, an alkyl group, a fluorine-substituted alkyl group, an allyl group and an aryl group, W is a divalent electron withdrawing group or a direct bonding, T is at least one bond or group selected from the group consisting of a direct bonding, a divalent electron withdrawing group, a divalent electron donating group and a divalent group represented by the following formula (C-1) or (C-2), and n is an integer of 2 or more; 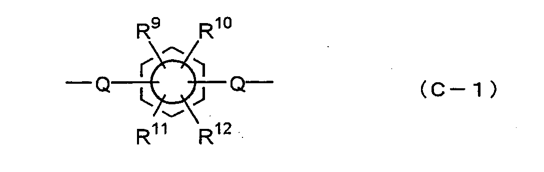 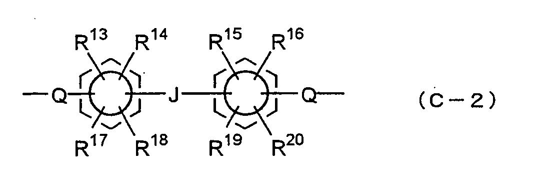 wherein R⁹ to R²⁰ may be the same or different and are each at least one atom or group selected from the group consisting of a hydrogen atom, a fluorine atom, an alkyl group, a fluorine-substituted alkyl group, an allyl group and an aryl group, Q is a direct bonding or a divalent electron donating group, and J is at least one bond, atom or group selected from the group consisting of a direct bonding, an alkylene group, a fluorine-substituted alkylene group, an aryl-substituted alkylene group, an alkenylene group, an alkynylene group, an arylene group, a fluorenylidene group, -O-, -S-, -CO-, -CONH-, -COO-, - SO- and -SO₂-.

2. The membrane-electrode structure for a solid polymer fuel cell as claimed in claim 1, wherein the polyarylene having a sulfonic acid group is polyarylene containing a sulfonic acid group in an amount of 0.3 to 5.0 meq/g.

3. The membrane-electrode structure for a solid polymer fuel cell as claimed in claim 1, wherein the electrode catalyst layers contain polyarylene having a sulfonic acid group comprising a recurring unit represented by the following formula (A) and a recurring unit represented by the following formula (B); 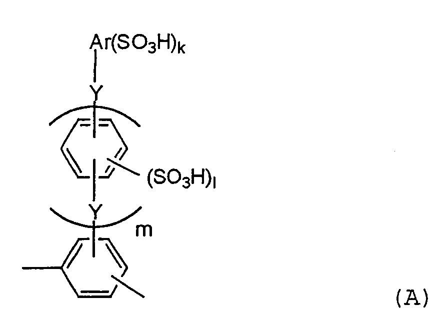 wherein Y is a direct bonding or a group selected from a divalent electron withdrawing group and a divalent electron donating group, Ar is a mononuclear or polynuclear aromatic group, m is an integer of 0 to 10, when m is an integer of 1 to 10, each Y may be the same or different, k is an integer of 0 to 5, 1 is an integer of 0 to 4, and k+1≥1; 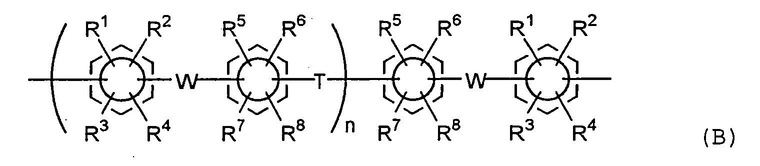 wherein R¹ to R⁸ may be the same or different and are each at least one atom or group selected from the group consisting of a hydrogen atom, a fluorine atom, an alkyl group, a fluorine-substituted alkyl group, an allyl group and an aryl group, W is a divalent electron withdrawing group or a direct bonding, T is at least one bond or group selected from the group consisting of a direct bonding, a divalent electron withdrawing group, a divalent electron donating group and a divalent group represented by the following formula (C-1) or (C-2), and n is an integer of 2 or more; 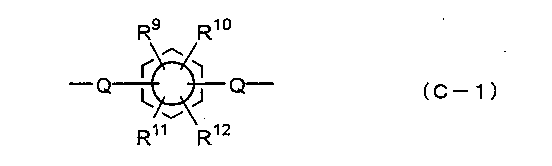 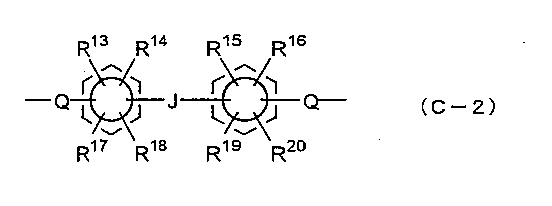 wherein R⁹ to R²⁰ may be the same or different and are each at least one atom or group selected from the group consisting of a hydrogen atom, a fluorine atom, an alkyl group, a fluorine-substituted alkyl group, an allyl group and an aryl group, Q is a direct bonding or a divalent electron donating group, and J is at least one bond, atom or group selected from the group consisting of a direct bonding, an alkylene group, a fluorine-substituted alkylene group, an aryl-substituted alkylene group, an alkenylene group, an alkynylene group, an arylene group, a fluorenylidene group, -O-, -S-, -CO-, -CONH-, -COO-, - SO- and -SO₂-;
and a carbon black supporting a hydrogen reduction catalyst.
